# EUROPEAN PATENT APPLICATION

(11) **EP 3 835 570 A1**
(43) Date of publication of application: **16.06.2021**
(21) Application number: 19215172.8
(22) Date of filing: 11.12.2019
(51) Int. Cl.: F03D 1/02, F03D 7/02

(54) **SYNCHRONIZATION OF ROTOR ANGLES OF MULTI-ROTOR WIND TURBINES**

(71) Applicant: Vestas Offshore Wind A/S, 8200 Aarhus N (DK)
(72) Inventor: NORDLYNG, Peter, 9500 Hobro (DK)
(74) Representative: Vestas Patents Department

(57) **Abstract**

The invention relates to a method for controlling rotor speeds (ω) of a wind turbine system (100), the wind turbine system comprising at least a first and a second wind turbine module (101a-101d) mounted to a common support structure (102), where each of the wind turbine modules comprises a rotor (111), a power generating system (113) driven by the rotor, and a rotor blade pitch adjustment system for pitching rotor blades (112). The method comprises:
- obtaining a rotor speed value relating to the rotor speed (ω) of the first wind turbine module (101a),
- obtaining a rotor angle value relating to the rotor angle (Φ) of the first wind turbine module (101a), and
- controlling the rotor speed and rotor angle of at least the second wind turbine module (101b) based on the rotor speed value and the rotor angle value so as to synchronize the rotor angle of the first and second wind turbine modules.

## Description

### FIELD OF THE INVENTION

The present invention relates to a wind turbine system with wind multiple turbine modules such as multi-rotor wind turbines, to a wind park comprising a plurality of such wind turbine systems, and to methods for coordinating rotation speed of rotors of wind multiple turbine modules.

### BACKGROUND OF THE INVENTION

In order to achieve further improvements in the development of wind turbines, a new wind turbine system has been developed. The new wind turbine system is a multi-rotor wind turbines which includes a plurality of wind turbine modules or nacelles and, therefore, a plurality of rotors. The wind turbine modules are mounted on a support structure which may include a plurality of support arms for the wind turbine modules.

The running of the plurality of rotors of the plurality of wind turbine modules, located relatively close, may case undesired effects with respect to the visual impact and noise generation.

Accordingly, there is a need to address these and other problems of multi-rotor wind turbines.

### SUMMARY OF THE INVENTION

It is an object of the invention to improve multi-rotor wind turbines, and wind parks with multi-rotor wind turbines, particularly to improve coordination of the rotation of the rotors of the wind turbines.

In a first aspect of the invention there is provided a method for controlling rotor speeds of a wind turbine system, the wind turbine system comprising at least a first and a second wind turbine module mounted to a common support structure, where each of the wind turbine modules comprises a rotor, a power generating system driven by the rotor, and a rotor blade pitch adjustment system for pitching rotor blades, the method comprises:
- obtaining a rotor speed value relating to the rotor speed of the first wind turbine module,
- obtaining a rotor angle value relating to the rotor angle of the first wind turbine module, and
- controlling the rotor speed and rotor angle of at least the second wind turbine module based on the rotor speed value and the rotor angle value so as to synchronize the rotor angle of the first and second wind turbine modules.

Advantageously, by controlling the rotor speed and rotor angle of one of the wind turbine modules based on rotor speed and rotor angle values of one of the other wind turbine modules, the two rotors are synchronized with respect to rotor speed and rotor angle.

The multi-rotor wind turbine may comprise three, four or more wind turbine modules. The synchronization of two or possibly all rotors may be performed so that the tips of the rotor blades passes at the highest possible distance which may reduce noise levels. The synchronization may further improve the visual appearance by providing a more calm appearance. It is also possible to perform the synchronization so that e.g. a first pair of two out of four rotors are running synchronized, but unsynchronized with respect to a second pair of rotors of the multi-rotor wind turbine. The second pair of rotors may be synchronized to each other, possibly with the same rotor speed as the first pair, but with different phases of the rotor angles. Use of different phases may reduce flicker which could otherwise result due to complete synchronization of all wind turbine modules.

The synchronized rotor angles imply that the rotors rotate with the same or substantially the same rotor speed, and that the phases of the synchronized rotors are the same or substantially the same or that the phases of the synchronized rotors are different but so that the rotor angle differences between two or more rotors are constant or substantially constant.

According to an embodiment, the rotor speed value is determined based an actual rotor speed of the first wind turbine module, or a rotor speed reference for at least the first wind turbine module. The rotor speed reference may be a dedicated reference for the first module, or a common reference for two or more wind turbine modules.

According to an embodiment, the rotor angle value is determined based on an actual rotor angle of the first wind turbine module, or a rotor angle reference for at least the first wind turbine module.

According to an embodiment, the first wind turbine module is a selected master wind turbine module and the at least second wind turbine module is a slave wind turbine module, wherein the rotor speed value is determined based on the actual rotor speed or the rotor speed reference for the first wind turbine module, and/or where the rotor angle value is determined based on the actual rotor angle of the first wind turbine module.

According to an embodiment, the master wind turbine module is selected as one of the wind turbine modules having the highest location in the wind turbine system, and/or as one of the wind turbine modules of a selected wind turbine system, where the selected wind turbine system is selected dependent on a location in a wind turbine park.

According to an embodiment the wind turbine system comprises wind turbine modules mounted at different heights and where wind turbine modules mounted at the same or substantially the same height are controlled so as to synchronize their rotor angles independently from the rotor angle of wind turbine modules mounted at other heights.

According to an embodiment, the rotor angle of at least the second wind turbine module is controlled so that a difference between the rotor angles of the first and second wind turbine modules is below an allowed maximum rotor angle difference. Advantageously, by allowing a certain synchronization tolerance may make the make the control of the rotor speed and rotor angle to achieve synchronized operation less complicated.

According to an embodiment, the rotor angle of at least the second wind turbine module is controlled so as to minimize a mean value of a difference between the rotor angles of the first and second wind turbine modules.

According to an embodiment, the wind turbine system comprises three or more wind turbine modules and at least a third one of the wind turbine modules is controlled independently from the rotor speed value and the rotor angle value of the first wind turbine module so that the rotor angle of the third wind turbine is unsynchronized with rotor angles of the other wind turbine modules. Advantageously, allowing at least one of the wind turbine modules may reduce oscillation in the multi-rotor wind turbine as compared to a situation where all modules are synchronized.

According to an embodiment, the method comprises controlling the rotor speed and rotor angle of the first and second wind turbine modules based on a common rotor speed reference and/or a common rotor angle reference which are common for the first and second wind turbine modules. Advantageously, instead of using a master module for obtaining the rotor speed value and/or the rotor angle value, and associated rotor speed and angle references, the rotor speed value and/or the rotor angle value may be determined in other ways e.g. as user determined values.

According to an embodiment, the method comprises
- obtaining an actual vibration level of one or more structural components of the wind turbine system,
- comparing the actual vibration level with a vibration level threshold,
- based on the comparison, determining if the synchronization of the rotor angle of the first and second wind turbine modules should be cancelled.

Advantageously, the synchronization is stopped if the vibration level becomes too high. The subsequent unsynchronized operation would likely reduce the vibration level.

According to an embodiment, a generator speed of the power generator is controllable via a pitch reference for the pitch adjustment system and a power or torque reference for the power generating system, wherein the controlling of the rotor speed and rotor angle comprises
- determining a rotor speed error based on a combination of a difference of the rotor speed value and an actual rotor speed and a difference between the rotor angle value and an actual rotor angle, and
- determining the pitch reference and/or the power or torque reference based on the rotor speed error so as to control the rotor speed.

A second aspect of the invention relates to a method for controlling a wind turbine park comprising at least first and second wind turbine systems, where each of the first and second wind turbine systems comprises at least first and a second wind turbine modules mounted to a common support structure, where each of the wind turbine modules comprises a rotor, a power generation system driven by the rotor, and a rotor blade pitch adjustment system for pitching rotor blades, the method comprises:
- controlling the rotor speed and the rotor angle of each of the first and second wind turbine systems using the method according to the first aspect.

Advantageously, by using the method according to the first aspect for the wind turbine modules of different multi-rotor wind turbines, i.e. by controlling the rotor speed and rotor angle of at least one second wind turbine module in the second wind turbine system based on the rotor speed value and the rotor angle value of the first wind turbine module in the first wind turbine system, the rotor angle of the first and second wind turbine modules of the different multi-rotor wind turbines can be synchronized.

According to an embodiment, controlling the rotor speed and the rotor angle of each of the first and second wind turbine systems comprises using equal or substantially equal rotor speed references and/or rotor angle references for at least one wind turbine module of the first wind turbine system and for at least one wind turbine module of the second wind turbine system, wherein the rotor speed reference and the rotor angle reference are determined from the rotor speed value and the rotor angle value, respectively.

According to an embodiment, controlling the rotor speed and the rotor angle of each of the first and second wind turbine systems comprises using different rotor speed references and/or rotor angle references for at least one wind turbine module of the first wind turbine system and for at least one wind turbine module of the second wind turbine system, wherein at least one of the rotor speed references and at least one of the rotor angle references are determined from the rotor speed value and the rotor angle value, respectively.

A third aspect of the invention relates to a wind turbine control system arranged to perform the steps according to the method according to the first aspect.

A fourth aspect of the invention relates to a power plant controller arranged to perform the steps according to the method of the second aspect.

A fifth aspect of the invention relates to a wind turbine system comprising at least first and a second wind turbine modules mounted to a common support structure, where each of the wind turbine modules comprises a rotor, a power generation system driven by the rotor, and a rotor blade pitch adjustment system for pitching rotor blades, and a wind turbine control system according to the third aspect.

A sixth aspect of the invention relates to a computer program product comprising software code adapted to control a wind power system and/or a wind power plant when executed on a data processing system, the computer program product being adapted to perform the method of any of the first and/or second apects.

In general, the various aspects and embodiments of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows a wind turbine system comprising four wind turbine modules,
Fig. 2A shows a rotor speed controller of a wind turbine module,
Fig. 2B shows an example of the rotor speed controller,
Fig. 3 shows a wind turbine control system arranged to control rotor speeds of wind turbine modules of a wind turbine system,
Fig. 4 shows an example of one of the rotor speed controllers for synchronized operation, and
Fig. 5 shows a wind turbine park comprising a power plant controller and at least first and second wind turbine systems.

### DESCRIPTION OF EMBODIMENTS

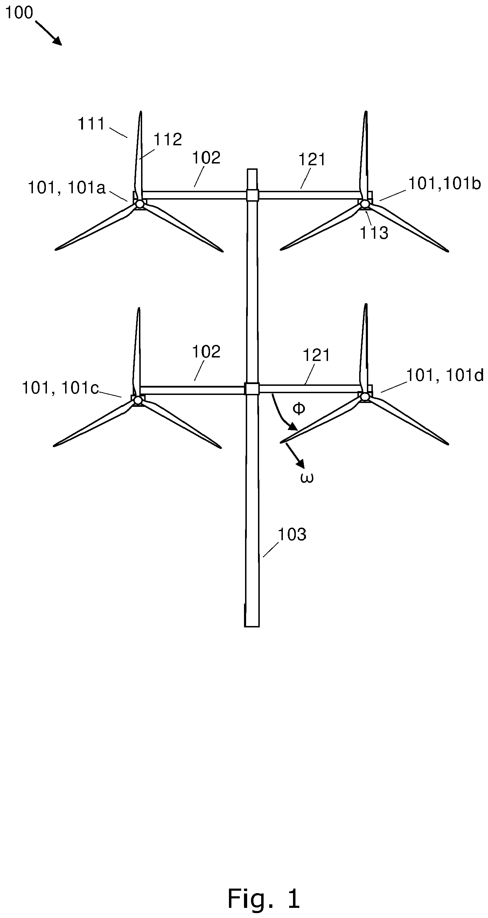

Fig. 1 shows a wind turbine system 100 which comprises a plurality of wind turbine modules 101 mounted to a common support structure 102. The common support structure may be configured in various ways, but is generally arranged to enable mounting of at least some wind turbine modules 101 away from the tower 103 and on opposite sides of the tower 103. For example, the common support structure 102 may be in the form of one or more beam structures 121 extending outwardly from the tower 103, e.g. from opposite sides of the tower 103.

Each of the wind turbine modules 101 comprises a rotor 111, a power generation system (not shown) driven by the rotor and a rotor blade pitch adjustment system (not shown) for pitching rotor blades 112. The power generation system and the pitch adjustment system may be included in nacelles 113 and hubs of the nacelles 113, respectively, of the respective wind turbine modules 101. The angular rotor position of the rotor 111 is denoted by Φ, and the rotor speed is denoted by ω, where ω is the time derivative of Φ.

Each of the plurality of wind turbines modules 101 are mounted on an end part of a corresponding beam structure 121, though other positions on the beam structures are possible, particularly when more than one wind turbine module is mounted on an a single beam structure or a part of a beam structure 121 extending in a given direction from the tower 103. Two or more beam structures 121 may be arranged with the tower to provide wind turbine modules 101 at different heights.

Specifically, Fig. 1 shows a multi-rotor support structure 103 with one upper beam structure 105 which comprises two support arms 102 extending on opposite sides of the tower 104 and a similar lower beam structure 105. In this example, each of the beam structures 105 carry two wind turbine modules 101, but other embodiments are of course conceivable. For example, each beam structure 105 may carry four wind turbine modules 101 with two on each side of the tower 101. In another example, the multi-rotor support structure has three beam structures 105 including lower, middle and upper beam structures 105, respectively having six, four and two wind turbine modules 101. A simple multi-rotor wind turbine may comprise two wind turbine modules carried by respective two support arms 102 extending on opposite sides of the tower 104.

The plurality of wind turbine modules carried by the support structure 102 may be in the same vertical plane, or they may be shifted relative to each other. In the wind turbine modules 101, the kinetic energy of the wind is converted into electrical energy by a power generation system (not shown), as it will be readily understood by a person skilled in wind turbines.

Individual wind turbine modules 101 are referred to as the first to fourth wind turbine modules 101a-101d.

The power generation system of each wind turbine module comprises power generator driven by the rotor via a drive train. The generator is connected with a power converter, which comprises a generator side converter and a line side converter. The generator side converter converts the generator AC power into DC power and the grid side converter converts the DC power into an AC power for injection into the power grid via output inductors of the wind turbine system 100.

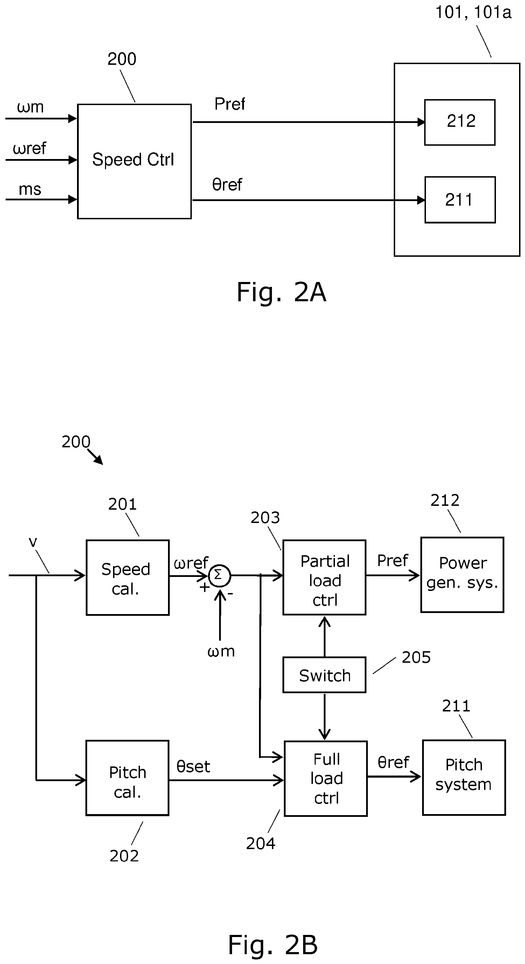

Fig. 2A illustrates a rotor speed controller 200 of a wind turbine module 101 for controlling rotation speed of the rotor 111 by determining a pitch reference θref for the pitch adjustment system 211, and a power or torque reference Pref for the power generating system 212.

The power generation system 101 is controllable via the power or torque reference Pref to change the generator torque and, thereby, the rotation speed and power production.

The pitch adjustment system is controllable via the pitch reference θref to change the aerodynamic efficiency of the rotor blades 112 and, thereby, the rotation speed and power production.

The feedback speed controller may be configured to control rotation speed in different load modes such as partial and full load modes.

The pitch reference θref and power reference Pref may be determined dependent on a difference between a rotor speed reference ωref, e.g. an optimum rotor speed ωopt or a rated rotor speed ωrated, and a measured rotor speed ωm. In addition to the rotor signals ωref and ωm, the pitch reference may be determined based on other input signals included in a measurement set, ms.

Fig. 2B shows an example of the rotor speed controller 200. The control system is configured with a partial load controller 203 which determines the power reference Pref and a full load controller 204 which determines the pitch reference θref dependent on a difference between the generator speed reference ωref and the measured generator speed ωm. The full load controller 204 may additionally receive a pitch setpoint θset.

The power reference Pref is supplied to the power generating system 212 which controls the generator torque and controls the generator to produce the requested power Pref.

The pitch reference θref is supplied to the pitch adjustment system 211 which performs pitch adjustment of the blades 112 and thereby the aerodynamic properties and wind energy captured by the rotor 111.

The partial load state is characterised in that the wind speed v is not high enough to enable generation of the nominal or rated electrical power from the generator. In this state, the pitch θ and the rotor speed are controlled to optimize aerodynamic efficiency of the wind turbine system 100. The rotor speed ωr and the generator speed are linked by the gear ratio of the gear of the drive train. In practice the pitch θ only varies little in the partial load state as a function of wind speed and may be set to the optimum pitch θopt which maximises the aerodynamic efficiency of the rotor. The rotor speed ωr may be controlled to extract as much power as possible by tracking the desired rotor speed ωref. In the partial load state the rotor speed ωr is controlled via the power reference Pref which affects generator torque.

Accordingly, in partial load, the partial load controller 203 determines the power reference Pref (i.e. a power or torque set point for the power generator 207) and adjusts the power reference Pref so that the difference between the rotor speed reference ωref and the measured rotor speed ωm is minimized. Alternatively, the generator or shaft torque may be set, e.g. via the power reference Pref, to match the aerodynamic torque which can be determined based on the measured wind speed squared and multiplied by an optimal mode gain.
The full load state is characterised in that the wind speed v is high enough to enable generation of the nominal or rated electrical power. Therefore, the rotor speed ωr and the generator power may be controlled to achieve a power production close to the nominal power. This is achieved by setting the rotor speed reference ωref to the rated rotor speed ωrated. In the full load state the rotor speed ωr is controlled via the pitch reference θref so as to achieve a controlled, e.g. substantially constant, extraction of wind energy by the blades. Additionally, in order to improve the stability of the power production during full load, the power generating system may be controlled with the power reference Pref which may set to the nominal power.

Accordingly, in full load, the full load controller 204 determines and adjusts the pitch reference θref so the difference between rotor speed reference ωref and the measured generator speed ωm is minimized.

During partial load, the full load controller may be configured to set the pitch reference θref to the pitch setpoint θset, e.g. the optimum pitch θopt. During full load the input θref to the full load controller 204 may be ignored.

The rotor speed reference ωref may be determined by a speed calculator 201 dependent on the estimated or measured wind speed energy content of the wind v and predetermined aerodynamic characteristics of the blades. The pitch setpoint θset may be determined by a pitch calculator 202 dependent on the estimated or measured wind speed energy content of the wind v, other predetermined aerodynamic characteristics of the blades and possibly the rotor speed ωr.

A shift between the partial load control and full load control may be invoked when the desired amount of electrical energy production is greater or smaller than the energy content of the wind. As an example, since the wind energy is dependent on the wind velocity, a shift between the partial load control and full load control may be invoked when the wind velocity v, passes a given threshold, e.g. given by the rated wind speed, vrated. The switch 205 determines which of the partial load controller 203 or the full load controller 204 should be active, e.g. by comparing the desired amount energy production with the energy content of the wind.

The speed controller 200 may be implemented with individual partial and full load controllers, e.g. by use of PID or similar control schemes. However, the feedback speed controller may be implemented in other ways, e.g. by use of model based control or other control methods arranged for determining the pitch and power references.

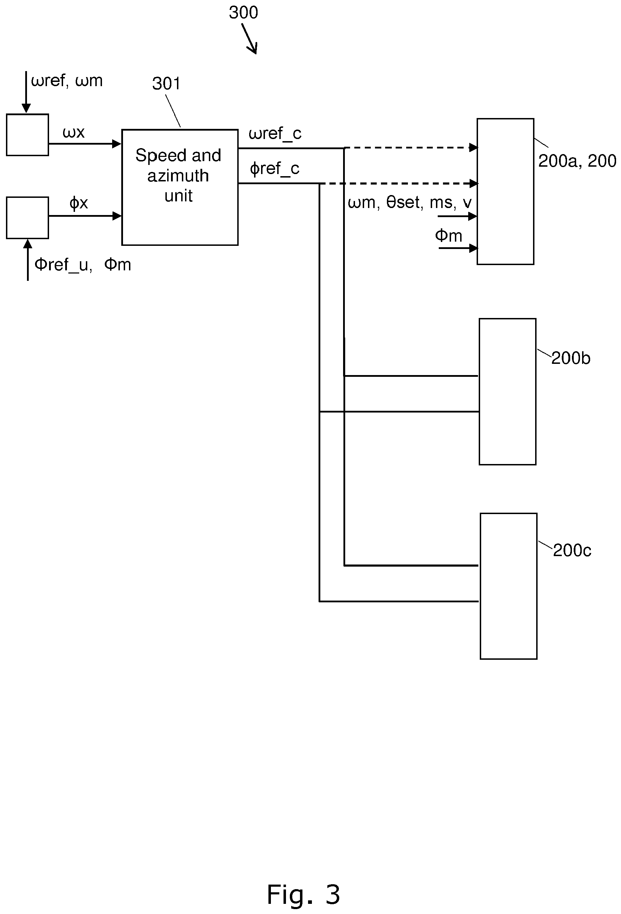

Fig. 3 shows a wind turbine control system 300 arranged to control rotor speeds of wind turbine modules 101 of a wind turbine system 100, such as a multi-rotor wind turbine. Part of the wind turbine control system 300 such as the speed and rotor angle unit 301 may be included in a power plant controller 501. However, this does not exclude that local versions of the speed and rotor angle unit 301 may be placed decentrally in individual wind turbine systems 100.

The wind turbine control system 300 comprises speed controllers 200a-200c, one for each wind turbine module 101. The speed controllers are arranged to control the rotor speed dependent on the speed reference coref_c which corresponds to ωref of Fig. 2. Further, input parameters and optional input parameters for the speed controller includes ωm, θset, ms and v as described in connection with Fig. 2. In addition to the speed controller 200 of Fig. 2, the speed controllers 200a-200c are configured to determine the rotor speed dependent on an rotor angle reference Φref_c, i.e. a reference for the rotor angle Φ as shown in Fig. 1, and associated measured rotor angles Φm.

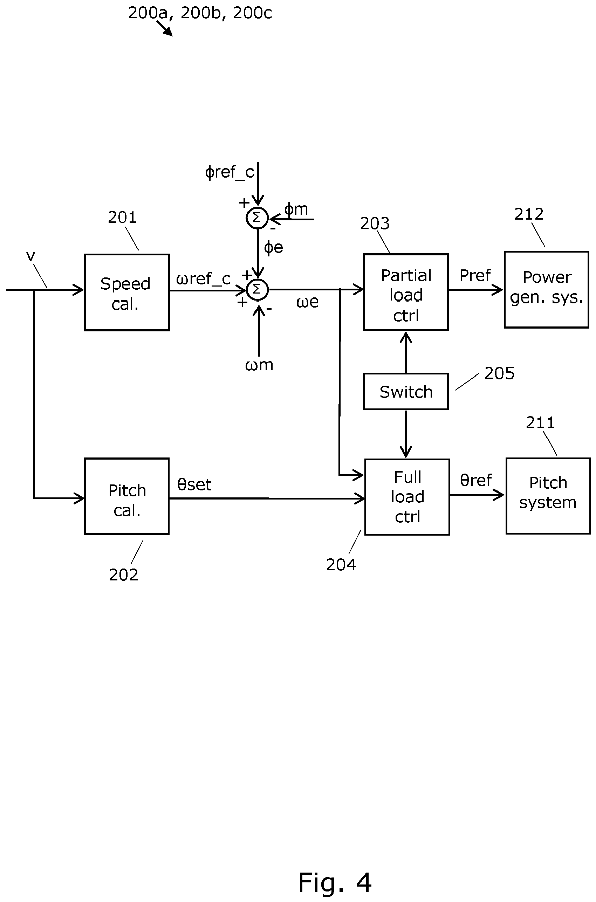

Fig. 4 shows an example of one of the speed controllers 200a-200c. In this example, the speed controllers differs from the speed controller 200 in Fig. 2 in that a rotor angle error Φe = Φref_c-Φm is added to the rotor speed error ωe = ωref_c-ωm, i.e. the rotor speed error ωe comprises the rotor angle error Φe. Accordingly, when the measured rotor angle Φm differs from the rotor angle reference Φref_c, the rotor speed is increased or decreased until the feedback control look has reduced the rotor angle error Φe to zero or substantially zero.

The rotor angle reference Φref_c may be different for different wind turbine modules 101a, of the same or different wind turbines 100. For example, it may be desired to have synchronized angles, but with different phases among the different wind turbine modules. Alternatively, the rotor angle reference Φref_c may be identical for two or more modules 101a.

Thus, the alternative speed controllers 200a-200c are configured to determine the rotor speed error ωe based on a combination of a difference of the rotor speed value ωx and an actual rotor speed ωm and a difference between the rotor angle value Φx and an actual rotor angle Φm. The pitch reference θref and the power or torque reference Pref are determined similarly as in the speed controller 200.

The speed and rotor angle unit 301 of the wind turbine control system 300 provides the speed and rotor angle references ωref_c, Φref_c, which may be determined from or given by the rotor speed and rotor angle values ωx, Φx. For example, the rotor speed and rotor angle values ωx, Φx may determined from the measured rotor speed ωm and rotor angle Φm of the first wind turbine module 101a so that the rotor speed and rotor angle values ωx, Φx corresponds to the actual rotor speed and rotor angle of the first wind turbine module. For example, ωx and Φx may determined by low pass filtering the measured rotor speed ωm and rotor angle Φm of the first wind turbine module 101a.

Alternatively or in combination, the rotor speed and rotor angle values ωx, Φx may be determined from a rotor speed reference and/or a rotor angle reference for the first wind turbine module 101a. For example, the rotor angle reference for the first wind turbine module 101a may be a user defined value or rotor angle reference Φref_u set by an operator of the wind turbine system 100 or a wind turbine park 500 comprising the wind turbine system 100 and other wind turbines. The rotor speed reference for the first wind turbine module 101a could be the reference ωref determined by the speed calculator 201 or could in some cases be a user or operator determined reference.

For example, the rotor speed value ωx could be determined from the measured rotor speed ωm of the first wind turbine module 101a, or the rotor speed reference ωref for the first wind turbine module 101a, whereas the rotor angle value Φx may be determined from a rotor angle reference, such as a user determined reference.

The rotor speed ω and rotor angle Φ of at least the second wind turbine module 200b is controlled with the speed and rotor angle references ωref_c, Φref_c which are based on the speed and rotor angle values ωx, Φx so that the rotor angle of the first and second wind turbine modules 101a,101b are synchronized.

That is, in one example, when the speed and rotor angle values ωx, Φx correspond to the actual speed and rotor angle ω, Φ of the first wind turbine module 101a, the first and second wind turbine modules are synchronized. In another example, when both the speed and rotor angle values ωx, Φx are determined from corresponding references such as user defined values, both the first and second wind turbine modules are controlled according to the speed and rotor angle references ωref_c, Φref_c. In a further example, when the speed value ωx is obtained from the actual rotor speed ω of the first wind turbine module 101a, and the rotor angle value Φx is obtained from a reference or user defined value, the rotor speeds of the first and second modules 101a, 101b are synchronized by controlling the rotor speed of the second wind turbine 101b module according to reference coref_c, and the rotor angles of the first and second modules 101a, 101b are synchronized by controlling the rotor angles of both the first and second wind turbine modules 101a, 101b according to the reference Φref_c.

In the example, where the rotor speed value ωx is determined based om the actual rotor speed ωm of the first module 101a or the rotor speed reference ωref for the first module 101a, and/or where the rotor speed angle Φx is determined based om the actual rotor angle Φm of the first module 101a or the rotor angle reference Φref_u solely for the first module 101a, the first wind turbine module 101a acts as a selected master wind turbine module and the at least second wind turbine module 101b acts as a slave wind turbine module.

The master wind turbine module may be selected according to different criteria such as one of the wind turbine modules of a wind turbine system 100 having the highest location. In case two or more wind turbine modules in a wind turbine park are to be synchronized, the master may be selected dependent on a location in the wind turbine park, e.g. a location which normally experiences the highest wind speeds, or low wind turbulence.

As an alternative to using a master wind turbine module 101a for determining the rotor speed and/or rotor angle values ωx, Φx, the rotor speed reference coref_c and/or a rotor angle reference Φref_c may be used as common references for both the first and second modules 101a, 101b and possibly other modules of the wind turbine system 100 or other wind turbines of the wind turbine park.

In Fig. 3 the input of the rotor speed reference coref_c and the rotor angle reference Φref_c to the first wind turbine module 101a is shown with dashed lines to indicate that the first wind turbine module 101a may be operated as a master where the first wind turbine module 101a is controlled independent of the rotor speed reference coref_c and/or the rotor angle reference Φref_c. In this case the master wind turbine module 101a may be controlled using the speed controller 200 of Fig. 2, while the slave modules are controlled using the modified speed controller 200a-200c of Fig. 4. In case the wind turbine module 101a is a master, the rotor angle Φ of the first module may be controlled according to a common rotor angle reference Φref_c.

The master-slave relationship may be configured to temporarily pause the synchronisation or otherwise relax the constraints set by the speed and rotor angle references ωref_c, Φref_c, e.g. by disregarding the rotor angle reference Φref_c, if the slave cannot follow the master e.g. due to other control aspects.

The speed controller 200a-200c may be configured to allow a variable or predetermined difference such as a maximum rotor angle difference between the rotor angles Φ of the first and second wind turbine modules. For example, the rotor angle error Φe may be determined so that errors within a given range, e.g. within -10 to 10 degrees or within -5 to 5 degrees, is set to zero. In this way the difference between the rotor angles Φ of the first and second wind turbine modules can be limited.

Alternatively or additionally, the speed controller 200a-200c may be configured so as to minimize a mean value of a difference between the rotor angles of the first and second wind turbine modules. Again this may be achieved by controlling the rotor speed ω dependent on the rotor angle error Φe using a feedback controller configured with an integral term.

In wind turbine system 100 with three or more wind turbine modules 101a-101d, all of the modules may be synchronized. Alternatively, one or more of the wind turbine modules such as the third wind turbine module 101c may be controlled independently from the rotor speed value ωx and the rotor angle value Φx of the first wind turbine module. In this way, one or more of the wind turbine modules are unsynchronized with other synchronized wind turbine modules. Thus, in a wind turbine system 100 a minimum of two wind turbine modules 101a-101d are synchronized, while the remaining modules may be controlled independently of other modules.

Since the synchronization of two or more wind turbine modules 101a-101d may promote structural oscillations, the wind turbine control system 300 may be configured to cancel the synchronization of the two dependent on a measured vibration level of one or more structural components of the wind turbine system 100. For example, if the measured vibration level, such as a time integration of vibration levels over a given period, exceeds a vibration level threshold, the wind turbine control system 300 may be configured to determine if the synchronization between two or more, not necessarily all, of the modules 101a-101d of a wind turbine system 100 is to be cancelled.

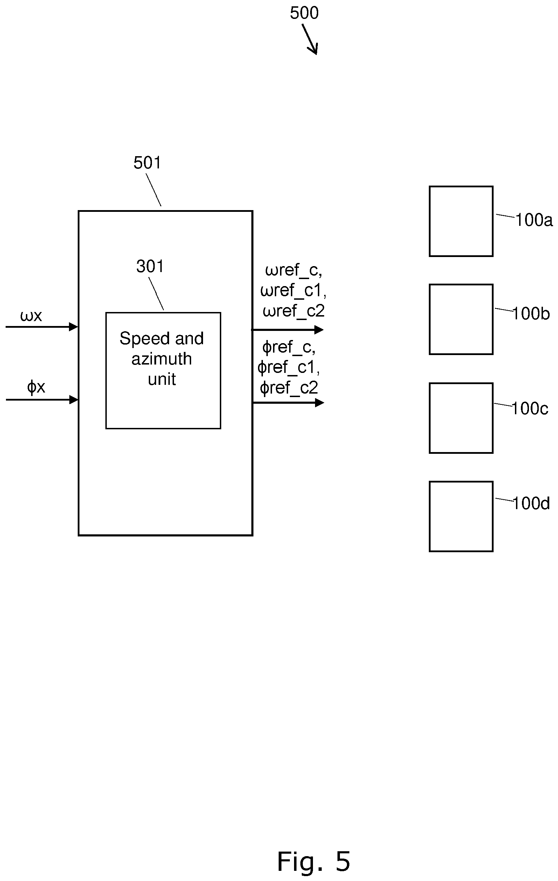

Fig. 5 shows a wind turbine park 500 comprising a power plant controller 501 and at least first and second wind turbine systems 100a-100d corresponding to the wind turbine system 100. The power plant controller 501 may comprise the speed and rotor angle unit 301 so that the rotor speed and rotor angle references ωref_c, Φref_c are distributed to the wind turbine systems 100a-100d in order to synchronize one or more of the wind turbine modules 101a-101d of one wind turbine systems 100a with one or more wind turbine modules 101a-101d of another wind turbine modules 100b. Thus, the power plant controller 501 enables control of the rotor speed and the rotor angle of one or more of the wind turbine systems 100a-100d by determining and distributing rotor speed and rotor angle references ωref_c, Φref_c.

By distributing the centrally determined rotor speed and rotor angle references ωref_c, Φref_c among wind turbines systems 100a-100d, wind turbine modules 101a-101d of a plurality of wind turbine systems may be synchronized. That is, one or more wind turbine modules 101a-101d of each of two or more wind turbine systems 100a-100d may be controlled to achieve synchronized operation. For example, the rotor speed and rotor angle values ωx, Φx used for determining the references ωref_c, Φref_c, may be measured values from one master module of one of the wind turbine systems 100a-100d, or they could be user determined values. When two or more wind turbine systems 100a-100d are synchronized, it may be determined to synchronize only one wind turbine module 101a-101d of each wind turbine system, but in general between one or all of the modules for each wind turbine system. In this example, with the centrally determined rotor speed and rotor angle references ωref_c, Φref_c, the speed and rotor angle unit 301 may be included in the power plant controller 501. Supplementing speed and rotor angle units 301 may additionally be included in one or more wind turbine systems 100a-100d, e.g. for determining the rotor speed reference coref_c locally from a master wind turbine module and for determining the rotor angle reference Φref_c decentrally from the power plant controller 501. As an alternative, only one of the rotor speed and rotor angle references ωref_c, Φref_c, may be centrally determined by the speed and rotor angle unit 301, e.g. rotor speed references coref_c may be centrally determined and applied in common to the wind turbine modules, whereas and rotor angle references Φref_c may be determined e.g. from one or more master wind turbine modules, or oppositely. In this example, with the centrally determined rotor speed and rotor angle references ωref_c, Φref_c, rotor speed references coref_c and/or the rotor angle references Φref_c to be used for at least one wind turbine module 101a-101d of the first wind turbine system 100a and for at least one wind turbine module 101a-101d of the second wind turbine system 100b, may be equal or substantially equal.

It is noted that the determined rotor angle reference Φref_c may be provided as a single angle reference value which should be satisfied a periodic time points determined from the rotor speed, or may be provided as a continuous phase signal or as a series of phase values to be satisfied at given time points as determined from the rotor speed or rotor speed reference ωref_c. Alternatively, or in combination, one or more wind turbine modules 101a-101d of each of two or more wind turbine systems 100a-100d may be controlled using different rotor speed references coref_c and/or rotor angle references Φref_c for at least one wind turbine module 101a-101d of one wind turbine system 100a and for at least one wind turbine module 101a-101d of another wind turbine system 100b. In this case, each different rotor speed reference and/or different rotor angle reference may be determined from the same rotor speed value ωx or the same rotor angle value Φx, respectively. E.g. the same rotor speed value ωx may be used for determining a first speed reference ωref_c1 as ωref_c1=ωx and a second speed reference ωref_c2 as ωref_c2=ωx + Δω, where Δω is a predetermined value. Alternatively, different rotor speed references ωref_c1, ωref_c2 may be determined from different rotor speed values as ωref_c1=ωx1 and ωref_c2=ωx2. Different rotor angle values Φref_c1, Φref_c2 can be determined in a similar way using these principles. The principles for determining the speed and angle references based on the same or different speed and angle values ωx, Φx can be mixed for the speed and angle references. The different speed and rotor angle references can be determined centrally by the speed and rotor angle unit 301 located in individual wind turbine systems 100a-100d, and/or decentrally by the speed and rotor angle unit 301 located in the power plant controller 501.

## Claims

1. A method for controlling rotor speeds (ω) of a wind turbine system (100a-100d), the wind turbine system comprising at least a first and a second wind turbine module (101a-101d) mounted to a common support structure (102), where each of the wind turbine modules comprises a rotor (111), a power generating system (113) driven by the rotor, and a rotor blade pitch adjustment system for pitching rotor blades (112), the method comprises:
- obtaining a rotor speed value (ωx) relating to the rotor speed (ω) of the first wind turbine module (101a),
- obtaining a rotor angle value (Φx) relating to the rotor angle (Φ) of the first wind turbine module (101a), and
- controlling the rotor speed and rotor angle of at least the second wind turbine module (101b) based on the rotor speed value and the rotor angle value so as to synchronize the rotor angle of the first and second wind turbine modules.

2. A method according to claim 1, wherein the rotor speed value (ωx) is determined based an actual rotor speed (ωm) of the first wind turbine module, or a rotor speed reference (ωref) for at least the first wind turbine module.

3. A method according to any of the preceding claims, wherein the rotor angle value (Φx) is determined based on an actual rotor angle (Φm) of the first wind turbine module, or a rotor angle reference (Φref_u) for at least the first wind turbine module.

4. A method according to any of claims 2-3, wherein the first wind turbine module is a selected master wind turbine module and the at least second wind turbine module is a slave wind turbine module, wherein the rotor speed value and/or the rotor angle value is determined according to the methods of claim 2 and/or claim 3.

5. A method according to claim 4, wherein the master wind turbine module is selected as one of the wind turbine modules having the highest location in the wind turbine system (100), and/or as one of the wind turbine modules of a selected wind turbine system (100), where the selected wind turbine system (100) is selected dependent on a location in a wind turbine park.

6. A method according to any of the preceding claims, wherein the wind turbine system comprises wind turbine modules mounted at different heights and where wind turbine modules mounted at the same or substantially the same height are controlled so as to synchronize their rotor angles independently from the rotor angle of wind turbine modules mounted at other heights.

7. A method according to any of the preceding claims, wherein the rotor angle (Φ) of at least the second wind turbine module is controlled so that a difference between the rotor angles of the first and second wind turbine modules is below an allowed maximum rotor angle difference.

8. A method according to claim any of the preceding claims, wherein the rotor angle (Φ) of at least the second wind turbine module is controlled so as to minimize a mean value of a difference between the rotor angles of the first and second wind turbine modules.

9. A method according to any of the preceding claims, wherein the wind turbine system comprises three or more wind turbine modules (101a-101d) and wherein at least a third one of the wind turbine modules is controlled independently from the rotor speed value and the rotor angle value of the first wind turbine module so that the rotor angle of the third wind turbine is unsynchronized with rotor angles of the other wind turbine modules.

10. A method according to any of the preceding claims, comprising controlling the rotor speed and rotor angle of the first and second wind turbine modules based on a common rotor speed reference (ωref_c) and/or a common rotor angle reference (Φref_c) which are common for the first and second wind turbine modules.

11. A method according to any of the preceding claims, comprising
- obtaining an actual vibration level of one or more structural components of the wind turbine system,
- comparing the actual vibration level with a vibration level threshold,
- based on the comparison, determining if the synchronization of the rotor angle of the first and second wind turbine modules should be cancelled.

12. A method according to any of the preceding claims, wherein a generator speed (ωm) of the power generator is controllable via a pitch reference (θref) for the pitch adjustment system, and a power or torque reference (Pref) for the power generating system, and wherein the controlling of the rotor speed and rotor angle comprises
- determining a rotor speed error (ωe) based on a combination of a difference of the rotor speed value (ωx) and an actual rotor speed (ωm) and a difference between the rotor angle value (Φx) and an actual rotor angle (Φm), and
- determining the pitch reference (θref) and/or the power or torque reference (Pref) based on the rotor speed error so as to control the rotor speed.

13. A method for controlling a wind turbine park (500) comprising at least first and second wind turbine systems (100a-100d), where each of the first and second wind turbine systems comprises at least first and a second wind turbine modules (101a-101d) mounted to a common support structure (102), where each of the wind turbine modules comprises a rotor (111), a power generation system driven by the rotor, and a rotor blade pitch adjustment system for pitching rotor blades (112), the method comprises:
- controlling the rotor speed (ω) and the rotor angle (Φ) of each of the first and second wind turbine systems using the method of any one of claim 1 to claim 12.

14. A method according to claim 13, wherein controlling the rotor speed and the rotor angle of each of the first and second wind turbine systems comprises using equal or substantially equal rotor speed references (ωref_c) and/or rotor angle references (Φref_c) for at least one wind turbine module (101a-101d) of the first wind turbine system (100a) and for at least one wind turbine module (101a-101d) of the second wind turbine system (100b), wherein the rotor speed reference (ωref_c) and the rotor angle reference (Φref_c) are determined from the rotor speed value (ωx) and the rotor angle value (Φx), respectively.

15. A method according to any of claims 13-14, wherein controlling the rotor speed and the rotor angle of each of the first and second wind turbine systems comprises using different rotor speed references (ωref_c) and/or rotor angle references (Φref_c) for at least one wind turbine module (101a-101d) of the first wind turbine system (100a) and for at least one wind turbine module (101a-101d) of the second wind turbine system (100b), wherein at least one of the rotor speed references (ωref_c) and at least one of the rotor angle references (Φref_c) are determined from the rotor speed value (ωx) and the rotor angle value (Φx), respectively.

16. A wind turbine control system (300) arranged to perform the steps according to the method of claims 1-12.

17. A power plant controller (501) arranged to perform the steps according to the method of claims 13-15.

18. A wind turbine system (100a-100d) comprising at least first and a second wind turbine modules (101a-101d) mounted to a common support structure (102), where each of the wind turbine modules comprises a rotor (111), a power generation system driven by the rotor, and a rotor blade pitch adjustment system for pitching rotor blades (112), and a wind turbine control system (300) according to claim 16.

19. A computer program product comprising software code adapted to control a wind power system and/or a wind power plant when executed on a data processing system, the computer program product being adapted to perform the method of any of the claims 1-15.
